# EUROPEAN PATENT APPLICATION

(11) **EP 4 560 980 A1**
(43) Date of publication of application: **28.05.2025**
(21) Application number: 23854105.6
(22) Date of filing: 28.06.2023
(51) Int. Cl.: H04L 9/40, H04L 49/354

(54) **COMMUNICATION METHOD AND RELATED DEVICE THEREOF**

(30) Priority: 19.08.2022 CN 202211000844
(71) Applicant: Huawei Technologies Co., Ltd., Shenzhen, Guangdong 518129 (CN)
(72) Inventor: FU, Zheng, Shenzhen, Guangdong 518129 (CN); ZHU, Tong, Shenzhen, Guangdong 518129 (CN); REN, Huajun, Shenzhen, Guangdong 518129 (CN)
(74) Representative: Körber, Martin Hans
(86) International application number: PCT/CN2023/103176
(87) International publication number: WO 2024/037200

(57) **Abstract**

This application discloses a communication method and a related device thereof, applied to network communication in the internet industry. The method includes: A first communication apparatus generates a first BGP message used for advertising a first EVPN MAC route, where the first BGP message includes a first MAC address and first indication information, and the first indication information indicates a priority of the first EVPN MAC route obtained by the first communication apparatus. In addition, the first communication apparatus sends the first BGP message to a second communication apparatus. When a non-gateway receives the first BGP message, and the non-gateway learns the first MAC address locally, the non-gateway determines, based on the first indication information, that a local MAC entry reaching the first MAC address is not generated. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

## Description

This application claims priority to Chinese Patent Application No. CN202211000844.7, filed with the China National Intellectual Property Administration on August 19, 2022 and entitled "COMMUNICATION METHOD AND RELATED DEVICE THEREOF", which is incorporated herein by reference in its entirety.

### TECHNICAL FIELD

Embodiments of this application relate to the communication field, and in particular, to a communication method and a related device thereof.

### BACKGROUND

With the rapid development of the society, internet technologies also make rapid progress. In various application scenarios of the current internet, in a standard Ethernet virtual private network (Ethernet virtual private network, EVPN), one access-side device may be used by a plurality of user equipments to access a network. In this case, the access-side device obtains corresponding specific MAC routes based on media access control (media access control, MAC) addresses of all the user equipments, and sends, via a route reflector (route reflector, RR), all the obtained specific MAC routes to an aggregation layer gateway device connected to a to-be-accessed destination device. Because the access-side device is connected to a large quantity of user equipments, a large quantity of specific MAC routes are sent to the aggregation layer gateway device via the RR. As a result, load of the RR and the aggregation layer gateway device is heavy.

In this case, an unknown MAC route (unknown MAC route, UMR) solution is currently used to reduce the load of the RR and the aggregation layer gateway device. A UMR is a MAC route with an all-zero MAC address. Specifically, after obtaining the foregoing specific MAC route, the access-side device sends the UMR to the aggregation layer gateway device via the RR to replace the specific MAC route, to guide traffic forwarding. This may reduce the load of the RR and the aggregation layer gateway device.

However, when a traffic loop occurs between the access-side device and the aggregation layer gateway device, or when a user equipment spoofs a MAC address of the aggregation layer gateway device to attack the access-side device, the aggregation layer gateway device obtains local MAC address that is the same as that of the aggregation layer gateway device. Because the access-side device advertises only the UMR with an all-zero MAC address to the aggregation layer gateway device, the access-side device currently mistakenly considers the access-side device as the aggregation layer gateway device. As a result, traffic sent by the user equipment to a receive-end device cannot reach the aggregation layer gateway device, resulting in reduction of reliability of network security.

### SUMMARY

This application provides a communication method and a related apparatus thereof, applied to network communication in the internet industry. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

According to a first aspect, a communication method is provided, and includes:
A first communication apparatus generates a first border gateway protocol (border gateway protocol, BGP) message used for advertising a first EVPN MAC route, where the first BGP message generated by the first communication apparatus includes a first MAC address and first indication information, and the first indication information indicates a priority of the first EVPN MAC route.

The first communication apparatus sends the first BGP message to a second communication apparatus.

For example, when the second communication apparatus is a non-gateway, the first communication apparatus sends the first BGP message including the first indication information to the second communication apparatus, where the first indication information indicates the priority of the first EVPN MAC route. In this way, when the second communication apparatus learns the first MAC address locally, the second communication apparatus determines, based on the first indication information, that a local MAC entry of the first MAC address is not generated. Alternatively, when the second communication apparatus is a gateway, after receiving the first BGP message, the second communication apparatus forwards, to a non-gateway, the first BGP message that carries the first indication information, or sends BGP message that carries other indication information and the first MAC address and that is used for advertising an EVPN MAC route of the first MAC address learned by the second communication apparatus, to prevent the non-gateway from generating a local MAC entry when the non-gateway learns the first MAC address locally.

In this implementation of this application, it can be learned from the foregoing descriptions that the first BGP message sent by the first communication apparatus includes the first indication information and the first MAC address, and the first indication information indicates the priority of the first EVPN MAC route. In a UMR application scenario, the non-gateway may determine the priority of the first MAC route based on the first indication information, and when the non-gateway learns the first MAC address locally, the non-gateway does not generate the local MAC entry of the first MAC address. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

In a possible implementation of the first aspect, the first communication apparatus is a gateway. Optionally, the first communication apparatus may be Sleaf, a Spine, or an RR, an intermediate forwarding node, or an aggregation layer gateway device in another application scenario. This is not specifically limited herein.

In this implementation of this application, a role or a deployment location of the first communication apparatus is reflected, and diversity of the first communication apparatus is reflected.

In a possible implementation of the first aspect, a role of the first communication apparatus is Sleaf, and a role of the second communication apparatus is Aleaf.

Optionally, a role of the first communication apparatus may be a Spine, and a role of the second communication apparatus may be Aleaf.

Alternatively, a role of the first communication apparatus is Sleaf, and a role of the second communication apparatus is Sleaf.

Alternatively, a role of the first communication apparatus is Aleaf, and a role of the second communication apparatus is Sleaf.

In this implementation of this application, the roles of the first communication apparatus and the second communication apparatus are reflected, and the first communication apparatus and the second communication apparatus are diversified, and are applicable to a plurality of application scenarios.

In a possible implementation of the first aspect, an extended communities attribute of the first BGP message includes the first indication information.

In this implementation of this application, that the extended communities attribute of the BGP message includes the first indication information describes a manner of carrying the first indication information, so that reliability of the solution is reflected.

In a possible implementation of the first aspect, the extended communities attribute is an extended communities attribute for MAC migration or an extended communities attribute of a default gateway.

In this implementation of this application, the extended communities attribute is the extended communities attribute for MAC migration or the extended communities attribute of the default gateway, so that selectability and flexibility of the solution are improved.

In a possible implementation of the first aspect, a communities (communities) attribute of the first BGP message includes the first indication information.

In this implementation of this application, the communities attribute includes the first indication information, so that an application scenario of the solution is added and selectability of the solution is improved.

In a possible implementation of the first aspect, the first indication information indicates that the first MAC address is a MAC address of an access-side apparatus of the gateway. Specifically, the priority of the first EVPN MAC route is implicitly indicated by using the first indication information to indicate that the first MAC address is the MAC address of the access-side apparatus of the gateway. For example, the second communication apparatus may determine, based on the first indication information, that the first MAC address in the learned first EVPN MAC route is the MAC address of the access-side apparatus of the gateway supporting access, to determine the priority of the first EVPN MAC route, to prevent generating a local MAC entry of the first MAC address when the second communication apparatus that is a non-gateway learns the first MAC address locally.

Alternatively, the first indication information carries an identifier of the priority. Specifically, the priority of the first EVPN MAC route is displayed by using the identifier of the priority.

For example, when the second communication apparatus learns the first MAC address locally, the second communication apparatus may determine a priority of the role of the first communication apparatus of the first EVPN MAC route based on the identifier of the priority. In addition, when the priority of the role of the first communication apparatus is higher than a priority of the role of the second communication apparatus, the second communication apparatus does not generate the local MAC entry of the first MAC address. Alternatively, when a priority of the second communication apparatus and the priority of the first communication apparatus are the same, the second communication apparatus generates the local MAC entry of the first MAC address that is locally learned and obtains a local MAC route, and a priority of the local MAC route of the first MAC address is higher than a priority of the first EVPN MAC route learned remotely.

Specifically, for example, the identifier of the priority is role=10, where role represents a role, and 10 is used to identify the priority. It may be understood that role=10 is merely used as an example to understand this embodiment of this application. In an actual situation, the identifier of the priority may alternatively be in another form. This is not specifically limited herein. The second communication apparatus may determine, based on role=10 in the first indication information and the role, namely, role=8, of the second communication apparatus, that a role level of the first communication apparatus is higher than a role level of the second communication apparatus. Therefore, when the second communication apparatus learns the first MAC address locally, the second communication apparatus does not generate the local MAC entry of the first MAC address learned locally. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

Alternatively, when the second communication apparatus is a gateway, for example, an RR, specifically, when the first communication apparatus sends the first BGP message to the RR to advertise the priority of the first EVPN route, the RR advertises the first EVPN MAC route and the first indication information to a non-gateway. In this way, the non-gateway may determine the role of the first communication apparatus based on the first indication information. Similar to the foregoing descriptions, the non-gateway may determine that the role of the first communication apparatus is 10 and a role of the non-gateway is 8. In this case, when the non-gateway learns the first MAC address locally, the non-gateway does not generate a local MAC entry of the first MAC address learned locally. Therefore, this resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

For example, when the second communication apparatus is a gateway, the role of the second communication apparatus is 10. In this case, the role of the second communication apparatus has a same priority as the role of the first communication apparatus. Therefore, when the second communication apparatus learns the first MAC address locally, the second communication apparatus may generate a local MAC entry that reaches the first MAC address and whose next hop is a local interface, and may obtain a local MAC route based on the local MAC entry. A priority of the local MAC route is higher than a priority of the first EVPN MAC route learned remotely. In this way, MAC address migration is implemented, and an application scenario of the solution is added.

In this implementation of this application, the priority of the first EVPN MAC route is implicitly indicated or displayed by the first indication information in a plurality of manners, so that diversity and selectability of the solution are reflected.

In a possible implementation of the first aspect, the first communication apparatus receives a second EVPN MAC route advertised by the second communication apparatus. The second EVPN MAC route is a UMR with an all-zero MAC address.

In this implementation of this application, that the first communication apparatus receives the second EVPN MAC route sent by the second communication apparatus reflects that this solution is applicable to a UMR application scenario. In addition, in the UMR application scenario, it can be ensured that when an access-side device and an aggregation layer gateway device form a loop, or the access-side device is attacked by using a spoofed first MAC address, the access-side device does not generate a MAC route of the first MAC address learned locally, to ensure that the first MAC address is not migrated from the first communication apparatus to the second communication apparatus, and ensure that traffic reaches the aggregation layer gateway device, so that a possibility that the access-side device is successfully attacked is reduced, thereby improving reliability of network security.

In a possible implementation of the first aspect, the first communication apparatus receives a second BGP message from the gateway. The second BGP message is used for advertising a third EVPN MAC route. The second BGP message includes a second MAC address and second indication information. The second indication information indicates a priority of the third EVPN MAC route. A role of the first communication apparatus is a non-gateway. A role of the second communication apparatus is a gateway.

In addition, when the first communication apparatus learns the second MAC address from a local interface, the first communication apparatus skips generating a first local MAC entry that reaches the second MAC address and whose next hop points to the local interface.

In this implementation of this application, as a non-gateway, after receiving the second BGP message, the first communication apparatus determines the priority of the third EVPN MAC route based on the second indication information, and does not locally generate the first local MAC entry that reaches the second MAC address and whose next hop points to the local interface. This can ensure that when the first communication apparatus, namely, an access-side device, and an aggregation layer device form a loop, or the access-side device is attacked by using a spoofed first MAC address, a MAC route of the first MAC address learned locally is not generated, to ensure that the first MAC address is not migrated from the aggregation layer gateway device to the access-side device, and ensure that traffic reaches the aggregation layer gateway device, so that a possibility that the access-side device is successfully attacked is reduced, thereby improving reliability of network security.

In a possible implementation of the first aspect, the first communication apparatus receives a third BGP message sent by a third communication apparatus. The third BGP message is used for advertising a fourth EVPN MAC route. The third BGP message includes a third MAC address and third indication information. The third indication information of the third BGP message indicates a priority of the fourth EVPN MAC route. Both the first communication apparatus and the third communication apparatus are gateways. In addition, the first communication apparatus stores the fourth EVPN MAC route. A next hop of the fourth EVPN MAC route points to the third communication apparatus.

Then, the first communication apparatus learns the third MAC address from a local interface, and the first communication apparatus stores a second local MAC entry that reaches the third MAC address and whose next hop points to the local interface.

In this implementation of this application, when both the first communication apparatus and the third communication apparatus are gateways, the first communication apparatus may also receive and learn the fourth EVPN MAC route that is sent by the third communication apparatus and that carries the third indication information, to implement MAC address migration. In addition, a local MAC route corresponding to the third MAC address may be obtained based on the second local MAC entry. In this case, a priority of the local MAC route learned locally is higher than a priority of the fourth EVPN MAC route learned remotely.

In a possible implementation of the first aspect, Sleaf is connected to a destination device, namely, an access-side device on a gateway side, by using an EVPN active-active configuration.

In this implementation of this application, a mode of Sleaf in an application scenario is described, and the application scenario of the solution is added.

According to a second aspect, a communication method is further provided. The method is performed by a second communication apparatus. The method includes:
receiving a first BGP message sent by a first communication apparatus, where the first BGP message includes a first EVPN MAC route, the first BGP message includes a first MAC address and indication information, and the indication information indicates a priority of the first EVPN MAC route; and
storing the first EVPN MAC route.

In this implementation of this application, the second communication apparatus receives the first BGP message for advertising the first EVPN MAC route, and stores the first EVPN MAC route. When the second communication apparatus is a non-gateway, based on the first indication information, it can be ensured that when the first communication apparatus and the second communication apparatus form a loop, or a communication apparatus on a non-gateway side is attacked by using a spoofed first MAC address, a MAC route of the first MAC address learned locally is not generated. Alternatively, when the second communication apparatus is a non-gateway, the second communication apparatus may send, to the non-gateway, a BGP message that carries the indication information, where the BGP message is similar to the foregoing descriptions. In this way, it can be ensured that the first MAC address is not migrated from a gateway side, namely, an aggregation layer gateway device, to the non-gateway side, namely, an access-side device, to ensure that traffic of the access-side device reaches the aggregation layer gateway device, so that a possibility that the access-side device is successfully attacked is reduced, thereby improving reliability of network security.

In a possible implementation of the second aspect, an extended communities attribute of the first BGP message includes the indication information.

In this implementation of this application, that the extended communities attribute of the BGP message includes the first indication information describes a manner of carrying the first indication information, so that reliability of the solution is reflected.

In a possible implementation of the second aspect, the extended communities attribute is an extended communities attribute for MAC migration or an extended communities attribute of a default gateway.

In this implementation of this application, the extended communities attribute is the extended communities attribute for MAC migration or the extended communities attribute of the default gateway, so that selectability and flexibility of the solution are improved.

In a possible implementation of the second aspect, a communities attribute of the first BGP message includes the indication information.

In this implementation of this application, the communities attribute includes the first indication information, so that an application scenario of the solution is added and selectability of the solution is improved.

In a possible implementation of the second aspect, the first communication apparatus is a gateway, and the second communication apparatus is a non-gateway.

In this implementation of this application, the second communication apparatus receives and stores the first EVPN MAC route sent by the gateway. When the second communication apparatus is a non-gateway, it can be ensured, based on the first indication information, that when the first communication apparatus and the second communication apparatus form a loop, or the communication apparatus on a non-gateway side is attacked by using a spoofed first MAC address, a MAC route of the first MAC address learned locally is not generated, to ensure that the first MAC address is not migrated from a gateway side, namely, an aggregation layer gateway device, to the non-gateway side, namely, an access-side device, and ensure that traffic of the access-side device reaches the aggregation layer gateway device, so that a possibility that the access-side device is successfully attacked is reduced, thereby improving reliability of network security.

In a possible implementation of the second aspect, a role of the first communication apparatus is Sleaf, and a role of the second communication apparatus is Aleaf.

Optionally, a role of the first communication apparatus may be a Spine, and a role of the second communication apparatus may be Aleaf.

Alternatively, a role of the first communication apparatus is Sleaf, and a role of the second communication apparatus is Sleaf.

Alternatively, a role of the first communication apparatus is Aleaf, and a role of the second communication apparatus is Sleaf.

In this implementation of this application, the roles of the first communication apparatus and the second communication apparatus are reflected, and the first communication apparatus and the second communication apparatus are diversified, and are applicable to a plurality of application scenarios.

In a possible implementation of the second aspect, when the first MAC address is learned from a local interface, generation of a first local MAC entry that reaches the first MAC address and whose next hop points to the local interface is skipped.

In this implementation of this application, when the first MAC address is learned from the local interface, the generation of the first local MAC entry that reaches the first MAC address and whose next hop points to the local interface is skipped. It can be ensured that when the second communication apparatus and the first communication apparatus form a loop, or the second communication apparatus is attacked by using a spoofed first MAC address, the second communication apparatus does not generate a MAC route of the first MAC address learned locally, to ensure that the first MAC address is not migrated from the first communication apparatus to the second communication apparatus, and ensure that traffic reaches the first communication apparatus, so that a possibility that the second communication apparatus is successfully attacked is reduced, thereby improving reliability of network security.

In a possible implementation of the second aspect, an alarm is generated when the first MAC is learned. The alarm indicates that the second communication apparatus learns the first MAC address from the local interface.

In this implementation of this application, the alarm is generated, to prompt that the second communication apparatus is attacked, thereby improving reliability of network security.

In a possible implementation of the second aspect, a second EVPN MAC route is advertised to the first communication apparatus, where the second EVPN MAC route is a UMR with an all-zero MAC address.

In this implementation of this application, that the first communication apparatus receives the second EVPN MAC route sent by the second communication apparatus reflects that this solution is applicable to a UMR application scenario. In addition, in the UMR application scenario, it can be ensured that when an access-side device and an aggregation layer gateway device form a loop, or the access-side device is attacked by using a spoofed first MAC address, the access-side device does not generate a MAC route of the first MAC address learned locally, to ensure that the first MAC address is not migrated from the first communication apparatus to the second communication apparatus, and ensure that traffic reaches the aggregation layer gateway device, so that a possibility that the access-side device is successfully attacked is reduced, thereby improving reliability of network security.

In a possible implementation of the second aspect, both the first communication apparatus and the second communication apparatus are gateways. The first MAC address is learned from a local interface, and a second local MAC entry that reaches the first MAC address and whose next hop points to the local interface is generated. Specifically, the second communication apparatus further obtains a corresponding local MAC route based on the second MAC entry, and a priority of the local MAC route is higher than a priority of the first EVPN MAC route learned remotely.

In this implementation of this application, when both the first communication apparatus and a third communication apparatus are gateways, migration of the first MAC address between gateways is supported. In addition, based on the second local MAC entry, it can be learned that a priority of a local MAC route corresponding to the first MAC address is higher than a priority of a fourth EVPN MAC route learned remotely.

In a possible implementation of the second aspect, the indication information indicates that the first MAC address is a MAC address of an access-side apparatus of the gateway. Specifically, the priority of the first EVPN MAC route is implicitly indicated by using the indication information to indicate that the first MAC address is the MAC address of the access-side apparatus of the gateway. Alternatively, the indication information carries an identifier of the priority. Specifically, the priority of the first EVPN MAC route is displayed by using the identifier of the priority.

In this implementation of this application, the priority of the first EVPN MAC route is implicitly indicated or displayed by the first indication information in a plurality of manners, so that diversity and selectability of the solution are reflected.

In a possible implementation of the second aspect, Sleaf is connected to a destination device, namely, an access-side device on a gateway side, by using an EVPN active-active configuration.

In this implementation of this application, a mode of Sleaf in an application scenario is described, and the application scenario of the solution is added.

According to a third aspect, a communication apparatus is provided. The communication apparatus has functions of implementing the method according to any one of the first aspect or the possible implementations of the first aspect. The functions may be implemented by hardware, or may be implemented by hardware executing corresponding software. The hardware or software includes one or more modules corresponding to the functions.

In implementations of this application, the communication apparatus according to the third aspect performs the method described in any one of the first aspect or the possible implementations of the first aspect of this application.

According to a fourth aspect, a communication apparatus is provided. The communication apparatus has functions of implementing the method according to any one of the second aspect or the possible implementations of the second aspect. The functions may be implemented by hardware, or may be implemented by hardware executing corresponding software. The hardware or software includes one or more modules corresponding to the functions.

In implementations of this application, the communication apparatus according to the fourth aspect performs the method described in any one of the second aspect or the possible implementations of the second aspect of this application.

According to a fifth aspect, another communication apparatus is provided, and may include a processor. The processor is coupled to a memory. The memory is configured to store instructions. The processor is configured to execute the instructions in the memory, so that a communication device performs the method described in any one of the first aspect or the possible implementations of the first aspect of this application, or performs the method described in any one of the second aspect or the possible implementations of the second aspect of this application.

According to a sixth aspect, another communication apparatus is provided, and includes a processor, configured to execute a computer program (or computer-executable instructions) stored in a memory. When the computer program (or the computer executable instructions) is executed, the method according to any one of the first aspect and the possible implementations of the first aspect is performed.

In a possible implementation, the processor and the memory are integrated together.

In another possible implementation, the memory is located outside the communication apparatus.

The communication apparatus further includes a communication interface. The communication interface is used for communication between the communication apparatus and another device, for example, used for data and/or signal sending or receiving. For example, the communication interface may be a transceiver, a circuit, a bus, a module, or a communication interface of another type.

According to a seventh aspect, a computer-readable storage medium is provided, and includes computer-readable instructions. When the computer-readable instructions are run on a computer, the method described in any one of the first aspect, the possible implementations of the first aspect, the second aspect, or the possible implementations of the second aspect of this application is performed.

According to an eighth aspect, a computer program product is provided, and includes computer-readable instructions. When the computer-readable instructions are run on a computer, the method described in any one of the first aspect, the possible implementations of the first aspect, the second aspect, or the possible implementations of the second aspect of this application is performed.

### BRIEF DESCRIPTION OF DRAWINGS

FIG. 1 is a diagram of a UMR application scenario;
FIG. 2 is a diagram of an application scenario of a communication method according to an embodiment of this application;
FIG. 3 is a diagram of a communication method according to an embodiment of this application;
FIG. 4 is a diagram of an extended communities attribute for MAC migration according to an embodiment of this application;
FIG. 5 is a diagram of an extended communities attribute of a default gateway according to an embodiment of this application;
FIG. 6 is another diagram of a communication method according to an embodiment of this application;
FIG. 7 is a schematic flowchart of a communication method according to an embodiment of this application;
FIG. 8 is another schematic flowchart of a communication method according to an embodiment of this application;
FIG. 9 is a diagram of a structure of a communication apparatus according to an embodiment of this application;
FIG. 10 is a diagram of another structure of a communication apparatus according to an embodiment of this application; and
FIG. 11 is a diagram of another structure of a communication apparatus according to an embodiment of this application.

### DESCRIPTION OF EMBODIMENTS

Embodiments of this application provide a communication method and a related device thereof, applied to network communication in an internet industry. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

In this specification, claims, and accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, product, or device.

Before embodiments of this application are described, a UMR and a UMR application scenario are first briefly described, to facilitate subsequent understanding of embodiments of this application.

A specific MAC route is a MAC route whose MAC address is a learned actual address of a user equipment accessing a network or a to-be-accessed destination device.

The UMR is a MAC route with an all-zero MAC address, and is used to replace the specific MAC route, to guide traffic forwarding.

In network access communication in the current internet industry, because there are a large quantity of user equipments that are connected to the access-side device to access a network, the access-side device learns a large quantity of MAC routes, and the access-side device learns MAC addresses of connected user equipments to generate MAC routes, and sends all the generated MAC routes to an aggregation layer gateway device via an intermediate forwarding node or an RR. However, because there are a large quantity of MAC routes sent by the access-side device, and MAC routes sent in a current standard Ethernet virtual private network (Ethernet virtual private network, EVPN) are all specific MAC routes, load of the RR and the aggregation layer gateway device is heavy, and working load is increased. Therefore, the access-side device uses UMRs to replace the specific MAC routes, to reduce load of MAC route learning on the RR and the aggregation layer gateway device and further guide traffic forwarding.

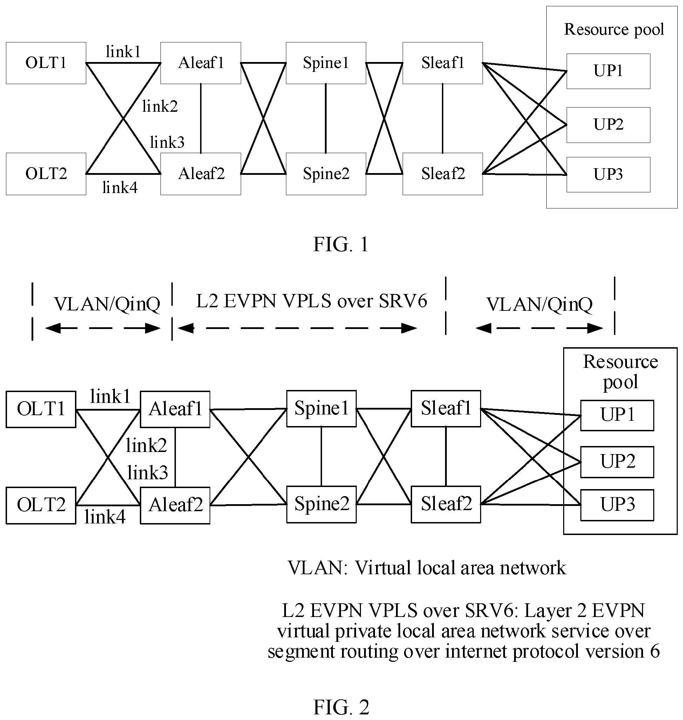

For example, for ease of understanding, the following provides descriptions by using an example in which a new metropolitan area network architecture shown in FIG. 1 is used as an application scenario. FIG. 1 is a diagram of a UMR application scenario. Specifically, an optical line terminal (optical line terminal, OLT) 1 and OLT2 respectively represent devices, which are equivalent to user equipments, corresponding to users accessing a network. An access leaf (access leaf, Aleaf) 1 and Aleaf2 represent leaves, namely, access-side devices, via which OLT1 and OLT2 access the network. Spine1 and Spine2 represent intermediate forwarding nodes or reflectors in the network and are configured to forward traffic or a MAC route. A server leaf (server leaf, Sleaf) 1 and Sleaf2 represent gateway devices, namely, aggregation layer gateway devices, connected to a resource pool. In the resource pool, UP1, UP2, and UP3 represent that a broadband remote access server (broadband remote access server, BRAS) is used by the user to perform device authentication. link1, link2, link3, and link4 respectively represent links for OLT1 and OLT2 to access Aleafl or Aleaf2.

For example, for ease of understanding, the following provides descriptions by using an example in which the resource pool is accessed by using a path of OLT1->Aleaf1->Spine1->Sleaf1. When OLT1 accesses the network to access the resource pool, OLT1 may access Aleaf1 through link1. Aleafl learns a MAC route of OLT1 from received traffic or a received address resolution protocol (address resolution protocol, ARP) request sent by OLT1, and advertises the MAC route to EVPN neighbors, that is, Aleaf2 and Spine1, so that Aleaf2 knows that a MAC address of OLT1 is learned by Aleafl, and advertises the MAC route to Sleafl via Spine1. Because Aleafl is connected to a large quantity of OLTs, Aleaf1 learns a large quantity of MAC routes. Therefore, to reduce load of Spine1 and Sleafl, Aleafl advertises a UMR to Sleafl, in other words, notifies Spine1 to advertise the UMR with an all-zero MAC address to Sleafl.

In addition, Sleafl learns a MAC address (which may be understood as a MAC address of UP1, UP2, or UP3 in an actual situation, and is not specifically limited herein) of the resource pool, further generates a MAC route, and advertises the MAC route to Aleafl. Aleafl stores the MAC route for subsequent transmission of the traffic sent by OLT1. However, when Aleafl and Sleaf1 form a loop (for example, a device short circuit occurs between Aleafl and Sleaf1), Aleaf1 learns the MAC address of the resource pool locally and generates a MAC route. That is, Aleafl and Sleaf1 learn a same local MAC route. In this case, the MAC route of Sleaf1 is migrated to Aleafl. Because Alea1 advertises the UMR to Sleafl, Sleaf1 cannot sense that the MAC route is migrated to Aleafl, and Aleafl mistakenly considers Aleafl itself as Sleafl. As a result, authentication traffic sent by OLT1 to the resource pool cannot reach Sleaf1, resulting in reduction of reliability of network security.

Similarly, when another OLT, for example, OLT2, spoofs the MAC address learned by Sleafl, and attacks Aleafl from link2 to access the network, Aleafl learns a MAC address from traffic or an ARP request of OLT2 and generates a MAC route that is the same as the MAC route generated by Sleafl through local learning. Similar to the foregoing descriptions, in this case, Sleaf1 cannot sense that the MAC route is migrated to Aleafl, and Aleaf1 mistakenly considers Aleaf1 itself as Sleaf1. As a result, authentication traffic or subsequent traffic sent by OLT1 to the resource pool cannot reach Sleafl, resulting in reduction of the reliability of the network security.

The foregoing merely provides descriptions by using an example in which the resource pool is accessed by using the path of OLT1->Aleaf1->Spine1->Sleaf1. It may be understood that, in an application scenario in which another access-side device sends the UMR to the aggregation layer gateway device, a similar problem also exists. When a traffic loop occurs between the access-side device and the aggregation layer gateway device, or when a user equipment spoofs a MAC address of the aggregation layer gateway device to attack the access-side device, the access-side device obtains local MAC address that is the same as that of the aggregation layer gateway device. In addition, because the access-side device advertises only the UMR with an all-zero MAC address to the aggregation layer gateway device, the aggregation layer gateway device cannot sense that the MAC address is migrated to the access-side device. As a result, the access-side device mistakenly considers the access-side device itself as the aggregation layer gateway device.

In addition, for example, when the access-side device receives traffic used by an OLT device to access a device connected to a gateway device, an access device forwards the traffic to an attack device through a local interface. As a result, the traffic sent by the OLT device to the receive-end device cannot reach the aggregation layer gateway device, resulting in reduction of the reliability of the network security.

To resolve the foregoing problem, embodiments of this application first provide a communication method and a related device thereof, applied to the internet industry. A first communication apparatus generates a first BGP message used for advertising a first EVPN MAC route. The first BGP message includes a first MAC address and first indication information. The first indication information indicates a priority of the first EVPN MAC route. Then, the first communication apparatus sends the first BGP message to a second communication apparatus. The second communication apparatus receives the first BGP message and stores the first EVPN MAC route advertised by using the first BGP message. In embodiments of this application, the first communication apparatus sends, to the second communication apparatus, the first BGP message that includes the first MAC address and the first indication information and that is used for advertising the first EVPN MAC route. After the second communication apparatus stores the first EVPN MAC route, when the second communication apparatus is a non-gateway, if the second communication apparatus learns the first MAC address locally, the second communication apparatus determines, based on indication information (including the first indication information), that a local MAC entry of the first MAC address is not generated. Alternatively, when the second communication apparatus is a gateway, the second communication apparatus forwards, to a non-gateway, the first BGP message that carries the first indication information, or sends BGP message that carries other indication information and the first MAC address and that is used for advertising an EVPN MAC route of the first MAC address learned by the second communication apparatus, to prevent the non-gateway from generating a local MAC entry when the non-gateway learns the first MAC address locally. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

For better understanding of embodiments of this application, the following first describes, in detail with reference to the accompanying drawings, a communication method provided in embodiments of this application. A person of ordinary skill in the conventional technology may learn that, with development of technologies and emergence of a new scenario, the technical solutions provided in embodiments of this application are also applicable to a similar technical problem.

For ease of understanding, the following still describes, based on a case in which an application scenario example is a new metropolitan area network architecture, the communication method provided in embodiments of this application. Specifically, FIG. 2 is a diagram of an application scenario of a communication method according to an embodiment of this application.

In the new metropolitan area network architecture shown in FIG. 2, OLT1, OLT2, Aleaf1, Aleaf2, Spine1, Spine2, Sleafl, Sleaf2, a resource pool, UP1, UP2, UP3, link1, link2, link3, and link4 are similar to those described in the example in FIG. 1. Details are not described herein again.

As shown in FIG. 2, the OLT and Aleaf, and Sleaf and the resource pool may be connected by using a virtual local area network (virtual local area network, VLAN) or a QinQ technology. It may be understood that in another application scenario, a virtual extensible local area network (virtual extensible local area network, VXLAN) technology may be used for the connection, or another technology that can achieve a same purpose may be used. This is not specifically limited herein.

Aleaf and Sleaf may use an EVPN virtual private local area network service (virtual private LAN service, VPLS) over segment routing (segment routing, SR) over internet protocol version 6 (internet protocol version 6, IPv6), and transparently transmit layer 2 user data through an IPv6 network, so that a user establishes a point-to-multipoint connection across the IPv6 network. That is, an L2 EVPN VPLS over SRv6 technology is deployed to implement traffic transmission. In addition, the L2 EVPN VPLS over SRv6 technology supports a case in which the resource pool accesses Sleaf in a multi-homing all-active mode, for example, a dual-homing single-active mode, a dual-homing active-active mode, or a single-homing single-active mode. This is not specifically limited herein. It should be noted that, optionally, a connection between Aleaf and Aleaf may further be established by using a technology such as L2 EVPN VPLS over multi-protocol label switching (multi-protocol label switching, MPLS). It may be understood that, in another application scenario, another technology may be used. This is not specifically limited herein.

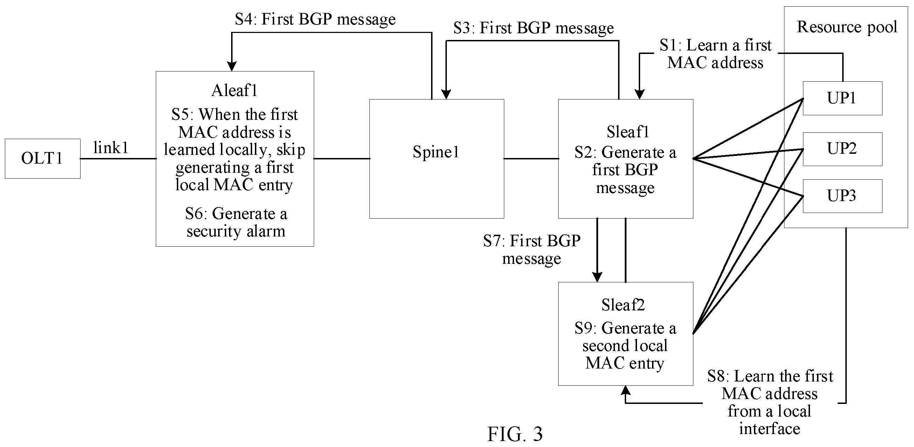

In the example in FIG. 2, Sleaf sends a specific MAC route to Aleaf. For example, the following describes, by using the application scenario shown in FIG. 2, the communication method provided in embodiments of this application. Specifically, FIG. 3 is a diagram of a communication method according to an embodiment of this application. In FIG. 3, a connection path of Aleaf1->Spine1->Sleaf1 is used as an example for description. Details are as follows:
S1: Sleaf1 learns a first MAC address.

Sleaf1 learns the first MAC address from a resource pool, where the first MAC address may be a MAC address of UP1, UP2, or UP3.

In a possible implementation, Sleafl receives, from a trusted interface, traffic or an ARP request sent by the resource pool, and triggers MAC learning, to learn the first MAC address carried in the traffic or the ARP request. At least one interface that connects Sleaf1 to the resource pool is the trusted interface. For example, an interface number of the at least one interface of Sleaf1 may be defined as a high priority to indicate that the interface is a trusted interface. Alternatively, during network deployment or planning of the scenario in FIG. 2, an identifier may be set to indicate that a corresponding interface is a trusted interface. The identifier may be a number, a character, a field, a Chinese character, or the like. This is not specifically limited herein. In this implementation of this application, the first MAC address is learned based on a trusted interface, so that Sleafl can ensure that the first MAC address is a MAC address of the resource pool.

In a possible implementation, Sleaf1 receives traffic or an ARP request sent by the resource pool, and triggers MAC learning, to learn the first MAC address carried in the traffic or the ARP request. Sleafl carries a gateway identifier, and the gateway identifier is used for identifying that Sleafl is connected to the resource pool. For example, during network deployment or planning of the scenario in FIG. 2, it is determined, based on a device location during deployment, that Sleafl and/or Sleaf2 connected to the resource pool are/is a same type of gateway devices, and the gateway identifier is used to represent the type of the gateway device. The gateway identifier may be a number, a character, a field, a Chinese character, or the like. This is not specifically limited herein. In this implementation of this application, the first MAC address learned by Sleafl that carries the gateway identifier can ensure that the first MAC address is a MAC address of the resource pool.

In a possible implementation, in a CU separation scenario, that is, a scenario in which a control plane (control plane) and a user plane (user plane) are separated, the MAC address of the resource pool may be an actual MAC address of UP1, UP2, or UP3, or may be a virtual MAC address allocated by a system. This is not specifically limited herein.

After learning the first MAC address, Sleafl generates a corresponding MAC route. Details are described in step S2.

S2: Sleaf1 generates a first BGP message.

After learning the first MAC address, Sleaf1 obtains a first EVPN MAC route, and generates the first BGP message used for advertising the first EVPN MAC route. The first BGP message includes the first MAC address and first indication information. The first indication information indicates a priority of the first EVPN MAC route.

Specifically, based on the first MAC address learned in S1, Sleaf1 may ensure that the first MAC address is obtained from the resource pool, obtain the first EVPN MAC route based on the first MAC address, and generate the first BGP message that carries the first indication information and the first MAC address. The first BGP message is used for advertising the first EVPN MAC route, and the first indication information indicates the priority of the first EVPN MAC route.

In addition, after obtaining the first BGP message, Sleaf1 sends the BGP message to an EVPN neighbor to advertise the first EVPN MAC route. Descriptions are provided in step S3 or subsequent step S7.

S3: Sleafl sends the first BGP message.

Sleaf1 sends the first BGP message to Spine1 to advertise the first EVPN MAC route, and Spine 1 further receives the BGP message and learns the first EVPN MAC route.

Specifically, an extended communities attribute of the first BGP message that is sent by Sleaf1 to Spine1 and that is used for advertising the first EVPN MAC route includes the first indication information.

In a possible implementation, the extended communities attribute is an extended communities attribute for MAC migration or an extended communities attribute of a default gateway. In addition, optionally, the first indication information indicates that the first MAC address is a MAC address of an access-side device, namely, the resource pool, of Sleafl. Specifically, the priority of the first EVPN MAC route is implicitly indicated by using the first indication information to indicate that the first MAC address is the MAC address of the access-side device of Sleafl.

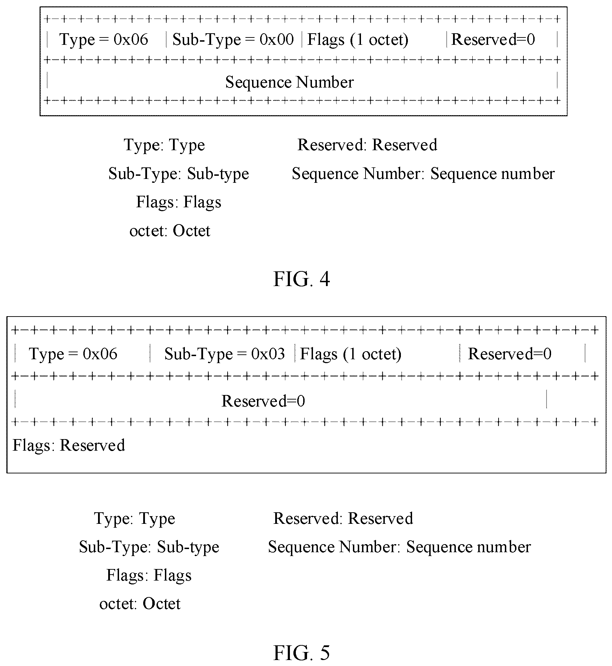

For example, when the first MAC address is learned by Sleafl from the trusted interface, when the first EVPN MAC route is advertised, Sleaf1 may set a sticky/static flag in the extended communities attribute for MAC migration, to indicate that the first MAC address is the MAC address of the resource pool, so as to indicate the priority of the first EVPN MAC route. For a specific example of the extended communities attribute for MAC migration, refer to FIG. 4. FIG. 4 is a diagram of the extended communities attribute for MAC migration according to this embodiment of this application. A type Type=0x06 and a sub-type Sub-Type=0x00 are used to identify that the attribute is the extended communities attribute for MAC migration. Flags (Flags) indicates the sticky/static flag (where 1 octet indicates that a length of Flags is 8 bits), reserved (Reserved) is used to identify a reserved bit, and a sequence number Sequence Number indicates a migration sequence number (representing a quantity of times of MAC migration).

For example, when Sleafl carries the gateway identifier, and the first EVPN MAC route is advertised, Sleafl may newly add an extended communities attribute type, for example, the extended communities attribute of the default gateway, that is, the newly added attribute type is indication information, to indicate that the first MAC address is the MAC address of the resource pool. Specifically, FIG. 5 is a diagram of the extended communities attribute of the default gateway according to this embodiment of this application. Type=0x06 and Sub-Type=0x03 are used to identify the newly added extended communities attribute type, for example, a MAC gateway extended communities attribute. It may be understood that the foregoing Sub-Type=0x03 is merely used as an example for understanding. In an actual situation, a value corresponding to Sub-Type may be user-defined based on an actual situation, and is not specifically limited herein. In addition, Flags remains reserved.

In this implementation of this application, the extended communities attribute is the extended communities attribute for MAC migration or the extended communities attribute of the default gateway, so that selectability and flexibility of the solution are improved.

In addition, in a possible implementation, a communities attribute of the first BGP message that is sent by Sleaf1 to Spine1 and that is used for advertising the first EVPN MAC route includes the first indication information. Optionally, the first indication information carries an identifier of the priority.

For example, because value ranges, of the communities attribute, from 0x00000000 to 0x0000FFFF and from 0xFFFF0000 to 0xFFFFFFFF are used as reserved, a value of the communities attribute is defined to implicitly indicate the priority of the first EVPN MAC route, that is, the value of the communities attribute is defined to indicate the priority of the route. In other words, the communities attribute is used as the first indication information. It may be understood that the value of the communities attribute may be specifically determined based on an actual situation, and is not specifically limited herein.

In this implementation of this application, the communities attribute is used as the first indication information, so that an application scenario of the solution is added and selectability of the solution is improved.

In this implementation of this application, the extended communities attribute or the communities attribute of the first BGP message that is sent by Sleafl to Spine1 and that is used for advertising the first EVPN MAC route includes the first indication information. This reflects a plurality of manners of indicating the priority of the first EVPN MAC route, and improves flexibility of the solution.

As an intermediate forwarding node or an RR, Spine1 sends the first EVPN MAC route to Aleaf after receiving the first EVPN MAC route. Details are described in the following step S4.

S4: Aleafl receives the first BGP message.

Aleaf1 receives the first BGP message forwarded by Spine 1, and stores the first EVPN MAC route advertised by using the first BGP message.

Specifically, Aleafl receives the first BGP message used for advertising the first EVPN MAC route, that is, Aleaf1 receives the BGP message that is sent by Sleafl and that is forwarded by Spine1. The extended communities attribute of the BGP message includes the indication information. Details are similar to those described in step S3, and are not described herein again.

In a possible implementation, after step S4, when Aleaf1 learns the first MAC address from a local interface, Aleafl skips generating a first local MAC entry that reaches the first MAC address and whose next hop points to the local interface. Details are described in the following step S5.

S5: When the first MAC address is learned locally, skip generating the first local MAC entry.

After Aleafl stores the first EVPN MAC route, if another OLT spoofs the first MAC address to attack Aleafl, or a traffic loop occurs between Sleafl and Aleafl, Aleaf1 learns the first MAC address from the local interface. In this case, Aleaf1 has stored the first EVPN MAC route of the first MAC address, and based on the priority of the first EVPN MAC route indicated by the indication information, Aleaf1 does not generate the first local MAC entry that reaches the first MAC address and whose next hop points to the local interface.

For example, in an application scenario in which the priority of the first EVPN MAC route is implicitly indicated by using the indication information to indicate that the first MAC address is the MAC address of the access-side apparatus of Sleaf, after Aleaf receives the BGP message, when Aleaf learns the first MAC address locally, Aleaf may determine that an apparatus that learns the first MAC address locally is not the access-side apparatus of Sleaf. Therefore, Aleaf may determine that Aleaf is attacked or the first MAC address is migrated from Sleaf to Aleaf, to skip generating the local MAC entry that reaches the first MAC address and whose next hop points to the local interface.

Alternatively, in an application scenario in which the indication information carries the identifier of the priority, when Aleaf learns the first MAC address locally, Aleaf may determine a priority of a role of Sleaf based on the identifier of the priority. For example, the priority of the role of Sleaf is 10 (for example), and a priority of a role of Aleaf is 8. Priority information of the role may be stored in a routing table or a forwarding information base (forwarding information Base, FIB), or may be associated with another entry or other information. This is not specifically limited herein. For ease of understanding, the following provides descriptions by using an example in which the identifier of the priority is a defined value of the foregoing communities. Specifically, in this case, the defined value of the communities may be used for associating the priority information of the role. Aleaf obtains the priority of the role of Sleaf based on the defined value of the communities, that is, role=10, where role indicates the role. Alternatively, the defined value of the communities indicates the priority information of the role, that is, the defined value is 10. Therefore, in this case, Aleaf may determine that the priority of the role of Aleaf, this is, role=8, is lower than the priority of the role of Sleaf, that is, role=10, so that Aleaf does not generate a corresponding local MAC entry based on the first MAC address learned locally. It should be noted that the example of the communities herein is merely used to understand this embodiment of this application. It may be understood that the identifier of the priority may alternatively be directly priority information of the role of Sleaf, or another identifier that can indicate the priority of the role. This is not specifically limited herein. Similarly, the foregoing role=10 and role=8 are merely used as examples for understanding this application. In an actual situation, the priority of the role may be determined based on a specific requirement. This is not specifically limited herein.

In this implementation of this application, when Aleafl learns the first MAC address from the local interface, generation of the first local MAC entry that reaches the first MAC address and whose next hop points to the local interface is skipped. It can be ensured that when Aleafl and Sleaf1 form a loop, or Aleafl is attacked by using a spoofed first MAC address, Aleafl does not generate a MAC route of the first MAC address learned locally, to ensure that the first MAC address is not migrated from Sleafl to Aleafl, and ensure that traffic of Aleaf1 reaches Sleafl, so that a possibility that Aleafl is successfully attacked is reduced, thereby improving reliability of network security.

In a possible implementation, when Aleafl learns the first MAC address locally, Aleafl generates an alarm. Details are described in step S6.

S6: Aleaf1 generates a security alarm.

When Aleafl learns the first MAC address from the local interface, Aleafl generates the security alarm, to prompt that Aleaf1 is attacked. For example, Aleafl may prompt, by using a log or an alarm or by sending a prompt message to a controller, a network administrator that Aleaf1 is attacked by an OLT that spoofs the first MAC address, and there is a network security threat. It may be understood that in an actual situation, the alarm may be generated in another manner. This is not specifically limited herein.

In this implementation of this application, when Aleafl learns the first MAC address from the local interface, Aleafl generates the alarm, to prompt that Aleafl is attacked, thereby improving the reliability of the network security.

In a possible implementation, Sleaf1 further advertises the first EVPN MAC route to Sleaf2. Details are described in step S7.

S7: Sleaf2 receives the first BGP message.

Sleaf2 receives, from Sleafl, the first BGP message used for advertising the first EVPN MAC route, and stores the first EVPN MAC route.

Specifically, Sleaf2 receives the first BGP message that is sent by Sleaf1 and that is used for advertising the first EVPN MAC route. The extended communities attribute or the communities attribute of the first BGP message carries the first indication information. Details are similar to those described in step S3, and are not described herein again.

In this implementation of this application, the first MAC address may be migrated from Sleaf1 to Sleaf2, so that when Sleafl is abnormal, it can also be ensured that OTL1 accesses the resource pool via Sleaf2.

In a possible implementation, after Sleaf2 stores the first EVPN MAC route, Sleaf2 further learns the first MAC address from a local interface, and generates a second local MAC entry that reaches the first MAC address and whose next hop points to the local interface. Details are described in the following step S8 and step S9.

S8: Sleaf2 learns the first MAC address from the local interface.

After storing the first EVPN MAC route, Sleaf2 learns the first MAC address of the resource pool from the local interface. Details are similar to those described in step S1, and are not described herein again.

S9: Sleaf2 generates the second local MAC entry.

Sleaf2 generates the second local MAC entry that reaches the first MAC address and whose next hop points to the local interface. Details are similar to those described in step S2, and are not described herein again.

Roles of Sleaf2 and Sleaf1 are the same, in other words, priorities of the roles are the same. Sleaf2 determines, based on the indication information, that the priorities of the roles of Sleaf2 and Sleaf1 are the same. A local MAC route obtained based on the second local MAC entry is generated locally, the first EVPN MAC route is sent by Sleaf1 remotely, and a priority of the route generated locally is higher than that of the route received remotely. To be specific, the priority of the local MAC route obtained based on the second local MAC entry is higher than the priority of the received first EVPN MAC route.

In a possible implementation, Sleaf2 generates a BGP message used for advertising the local MAC route obtained based on the second local MAC entry. The BGP message also carries the first MAC address and indication information indicating the priority of the local MAC route obtained based on the second local MAC entry. The indication information is similar to the first indication information described in step S3, and specific implementations of generating and sending the BGP message are similar to those in step S2 to step S4. Details are not described herein again.

In this implementation of this application, the first MAC address can be migrated between gateways having a same role, for example, Sleafl and Sleaf2.

In a possible implementation, before any one of step S1 to step S9, Sleafl receives a second EVPN MAC route sent by Aleafl. The second EVPN MAC route is a UMR with an all-zero MAC address. Details are similar to those described in FIG. 1, and are not described herein again.

In this implementation of this application, that Sleaf1 receives the second EVPN MAC route sent by Aleaf1 reflects that this solution is applicable to a UMR application scenario. In addition, in the UMR application scenario, it can be ensured that when Aleaf1 and Sleaf1 form a loop, or Aleafl is attacked by using a spoofed first MAC address, Aleafl does not generate a MAC route of the first MAC address learned locally, to ensure that the first MAC address is not migrated from Sleaf1 to Aleafl, and ensure that traffic of Aleaf1 reaches Sleafl, so that a possibility that Aleafl is successfully attacked is reduced, thereby improving reliability of network security.

In a possible implementation, Sleafl receives a third BGP message that is sent by another Sleaf (for example, Sleaf2) and that is used for advertising a fourth EVPN MAC route. The third BGP message includes a third MAC address and third indication information (where the third MAC address may be a resource pool address different from the foregoing first MAC address, specifically, for example, when the first MAC address is a MAC address of UP1, the third MAC address may be a MAC address of UP2 or UP1, and this is not specifically limited herein). The third indication information indicates a priority of the fourth EVPN MAC route. In addition, the fourth EVPN MAC route is stored. A next hop of the fourth EVPN MAC route points to Sleaf2 (namely, Sleaf that sends the fourth EVPN MAC route). Then, Sleaf1 learns the third MAC address locally, and stores a second local MAC entry that reaches the third MAC address and whose next hop points to a local interface. Details are similar to those described in step S7 to step S9, and are not described herein again.

In this implementation of this application, Sleafl may alternatively receive the third BGP message that is sent by the another Sleaf and that carries the third indication information, to implement MAC address migration.

In this embodiment of this application, Sleafl generates the BGP message used for advertising the first EVPN MAC route, where the BGP message includes the first MAC address and the first indication information, and the first indication information indicates the priority of the first EVPN MAC route; and sends the first EVPN MAC route to Aleafl. It can be ensured that when Aleaf1 and Sleaf1 form a loop, or Aleaf1 is attacked by using a spoofed first MAC address, Aleaf1 does not generate a MAC route of the first MAC address learned locally, to ensure that the first MAC address is not migrated from Sleaf1 to Aleaf1, and ensure that traffic of Aleaf1 reaches Sleaf1, so that a possibility that Aleafl is successfully attacked is reduced, thereby improving reliability of network security.

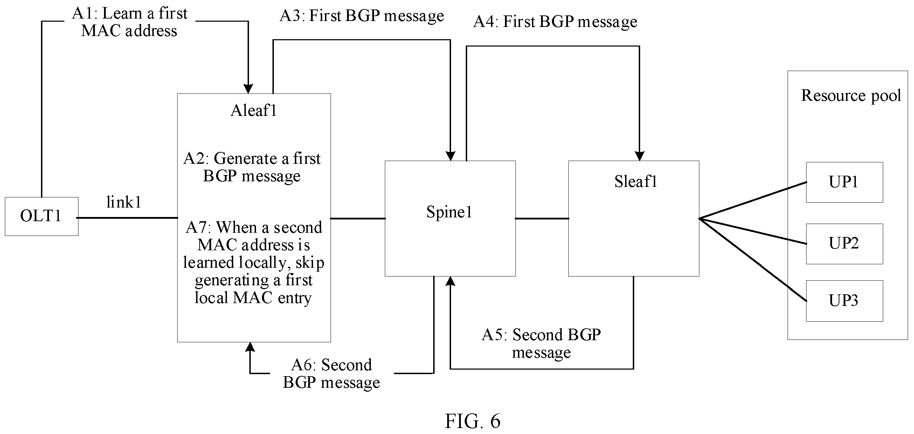

The following describes, with reference to an example in FIG. 6, another communication method provided in embodiments of this application. FIG. 6 is another diagram of a communication method according to an embodiment of this application. In FIG. 6, a connection path of Aleaf1->Spine1->Sleaf1 is still used as an example for description. Details are as follows:
A1: Aleafl learns a first MAC address.

In some environments with high information security requirements, Aleafl receives, from a trusted interface, traffic or an ARP request sent by OLT1, and triggers MAC learning, to learn the first MAC address carried in the traffic or the ARP request. Details are similar to those in step S1 in the example in FIG. 3 in which Sleaf1 learns the MAC address of the resource pool from the trusted interface. Details are not described herein again.

A2: Aleaf1 generates a first BGP message.

After learning the first MAC address, Aleaf1 obtains a first EVPN MAC route, and generates the first BGP message used for advertising the first EVPN MAC route. The first BGP message includes the first MAC address and first indication information. The first indication information indicates a priority of the first EVPN MAC route. Details are similar to those described in step S2 in FIG. 3, and are not described herein again. The first EVPN MAC route may be a specific MAC route or a UMR. This is not specifically limited herein.

After obtaining the first EVPN MAC route, Aleafl advertises the first EVPN MAC route to an EVPN neighbor. Descriptions are provided in step A3.

A3: Spine1 receives the first BGP message.

Aleaf1 advertises the first EVPN MAC route to Spine1, and Spine1 further receives the first BGP message. Details are similar to those described in step S3 in FIG. 3, and are not described herein again.

A4: Sleaf1 receives the first BGP message.

Sleaf1 receives the first BGP message sent by Spine1, and stores the first EVPN MAC route. Details are similar to those described in step S7 in FIG. 3, and are not described herein again.

In this embodiment of this application, Aleaf1 obtains the first EVPN MAC route that carries the first MAC address and the first indication information, and sends the first EVPN MAC route to Sleafl. This ensures that the OLT accesses a network through the trusted interface of Aleaf, to improve security and reliability of accessing the network by the OLT, and avoid an attack on Aleaf.

In a possible implementation, Aleaf1 receives a second BGP message sent by Sleafl. The second BGP message is used for advertising a third EVPN MAC route. The second BGP message includes a second MAC address and second indication information. The second indication information indicates a priority of the third EVPN MAC route. When learning the second MAC address locally, Aleafl skips generating a first local MAC entry that reaches the second MAC address and whose next hop points to a local interface. Details are described in the following step A5, step A6, and step A7.

A5: Sleaf1 sends the second BGP message.

Sleaf1 learns the second MAC address from the resource pool, obtains the third EVPN MAC route, and generates the second BGP message used for advertising the third EVPN MAC route. The second BGP message carries the second indication information and the second MAC address. Details are similar to those described in step A2, and are not described herein again.

In addition, Sleafl sends the second BGP message to Spine1, so that Spine1 continues to forward a fourth EVPN MAC route to Aleaf1. Details are similar to those described in step A3, and are not described herein again.

A6: Aleafl receives the second BGP message.

Aleaf1 receives the second BGP message forwarded by Spine1. Details are similar to those described in step S4 in FIG. 3, and are not described herein again.

A7: When learning the second MAC address locally, Aleaf1 skips generating the first local MAC entry.

After receiving the third EVPN MAC route, when Aleaf1 learns the second MAC address from the local interface, Aleafl does not generate the first local MAC entry that reaches the second MAC address and whose next hop points to the local interface. Details are similar to those described in step S5 in FIG. 3, and are not described herein again.

In this implementation of this application, after receiving the third EVPN MAC route, Aleafl does not locally generate the first local MAC entry that reaches the second MAC address and whose next hop points to the local interface. It can be ensured that when Aleafl and Sleaf1 form a loop, or Aleaf1 is attacked by using a spoofed first MAC address, Aleafl does not generate a MAC route of the second MAC address learned locally, to ensure that the second MAC address is not migrated from Sleafl to Aleafl, and ensure that traffic of Aleafl reaches Sleafl, so that a possibility that Aleafl is successfully attacked is reduced, thereby improving reliability of network security.

It should be noted that the connection path of Aleaf1->Spine1->Sleaf1 in the application scenario in FIG. 2, FIG. 3, and FIG. 6 is merely used as an example to understand embodiments of this application. OLT1, Aleafl, Spine1, and Sleafl are merely used as examples. It may be understood that, in an actual situation, the connection path may alternatively include OLT2, Aleaf2, Spine2, Sleaf2, and the like. Alternatively, in another application scenario, the connection path may include another user equipment, a non-gateway device, namely, an access-side device, an RR, or an aggregation layer gateway device. This is not specifically limited herein.

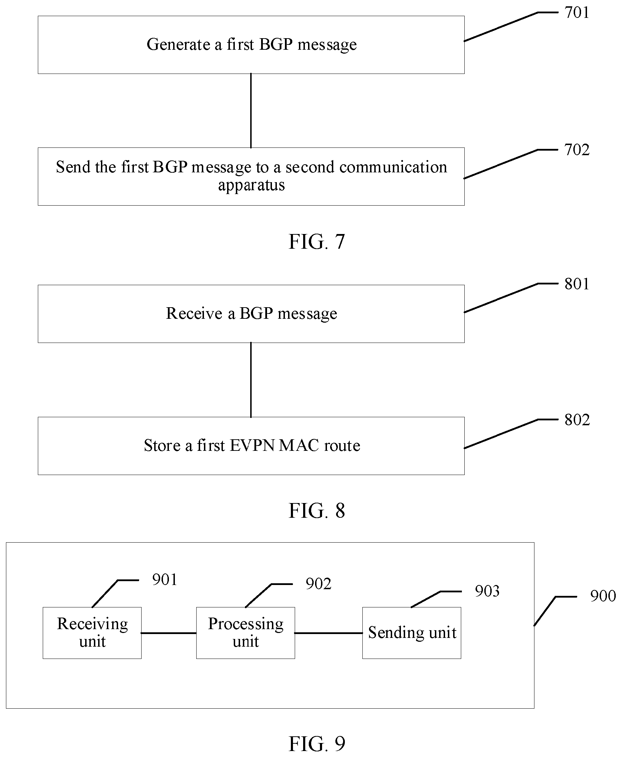

The following describes, with reference to FIG. 7, a communication method provided in embodiments of this application. FIG. 7 is a schematic flowchart of a communication method according to an embodiment of this application. The method specifically includes the following steps.

701: A first communication apparatus generates a first BGP message.

The first communication apparatus generates the first BGP message used for advertising a first EVPN MAC route. The first BGP message includes a first MAC address and first indication information. The first indication information indicates a priority of the first EVPN MAC route.

In the examples described in FIG. 3 and FIG. 6, the first communication apparatus may be the foregoing Aleafl, Spine1, or Sleafl, or may be another gateway or non-gateway. A specific operation of generating the first BGP message used for advertising the first EVPN MAC route is similar to that described in FIG. 3 and FIG. 6. Details are not described herein again.

702: The first communication apparatus sends the first BGP message to a second communication apparatus.

For example, when the first communication apparatus is Sleafl in FIG. 3, the second communication apparatus may be Spine1 in FIG. 3, and Sleaf1 directly advertises the first EVPN MAC route to Spine1. Details are similar to those described in step S3 in FIG. 3, and are not described herein again.

Alternatively, when the first communication apparatus is Sleafl in FIG. 3, the second communication apparatus may be Aleafl in FIG. 3, and Sleaf1 advertises the first EVPN MAC route to Aleafl via Spine1.

Alternatively, when the first communication apparatus is Sleafl in FIG. 3, the second communication apparatus may be Sleaf2 in FIG. 3. Descriptions are similar to those in step S7 in FIG. 3. Details are not described herein again.

Alternatively, when the first communication apparatus is Aleafl in FIG. 6, the second communication apparatus may be Sleafl in FIG. 6, and Aleafl sends the first EVPN MAC route to Sleafl via Spine1. Details are similar to those described in FIG. 6, and are not described herein again.

In a possible implementation, the first communication apparatus is a gateway, for example, Sleaf or the Spine in the application scenario shown in FIG. 3, or an RR, an intermediate forwarding node, or an aggregation layer gateway device in another application scenario. This is not specifically limited herein.

In a possible implementation, a role of the first communication apparatus is Sleaf, and a role of the second communication apparatus is Aleaf.

Optionally, in another application scenario, a role of the first communication apparatus may be a Spine, and a role of the second communication apparatus may be Aleaf.

Alternatively, a role of the first communication apparatus is Sleaf, and a role of the second communication apparatus is Sleaf.

Alternatively, a role of the first communication apparatus is Aleaf, and a role of the second communication apparatus is Sleaf.

It should be noted that, details are similar to those described in the examples in FIG. 3 and FIG. 6, and are not described herein again.

In a possible implementation, an extended communities attribute of the first BGP message includes the first indication information. Details are similar to the descriptions in the example in FIG. 3 in which Sleaf1 sends, to Aleaf1, the first BGP message used for advertising the first EVPN MAC route. Details are not described herein again.

In a possible implementation, the extended communities attribute is an extended communities attribute for MAC migration or an extended communities attribute of a default gateway. A specific implementation is similar to that described in the examples in FIG. 3 and FIG. 6, and details are not described herein again.

In a possible implementation, a communities attribute of the first BGP message includes the first indication information. A specific implementation is similar to that described in the examples in FIG. 3 and FIG. 6, and details are not described herein again.

In a possible implementation, the first indication information indicates that the first MAC address is a MAC address of an access-side apparatus of a gateway. Specifically, the priority of the first EVPN MAC route is implicitly indicated by using the first indication information to indicate that the first MAC address is the MAC address of the access-side apparatus of the gateway. Alternatively, the first indication information carries an identifier of the priority. Specifically, the priority of the first EVPN MAC route is displayed by using the identifier of the priority. A specific implementation is similar to that described in the examples in FIG. 3 and FIG. 6, and details are not described herein again.

In a possible implementation, the first communication apparatus receives a second EVPN MAC route advertised by the second communication apparatus. The second EVPN MAC route is a UMR with an all-zero MAC address.

In a possible implementation, the first communication apparatus receives a second BGP message from the gateway. The second BGP message includes a second MAC address and second indication information. The second indication information indicates a priority of a third EVPN MAC route. A role of the first communication apparatus is a non-gateway. The second indication information is similar to the foregoing first indication information, and details are not described herein again.

Then, when the first communication apparatus learns the second MAC address from a local interface, the first communication apparatus skips generating a first local MAC entry that reaches the second MAC address and whose next hop points to the local interface.

It should be noted that an implementation of this application is similar to that described in FIG. 6, and details are not described herein again. It may be understood that the first communication apparatus may be Aleafl shown in FIG. 6, and the gateway may be Spine1 or Sleaf1 in FIG. 6. This is not specifically limited herein.

In a possible implementation, the first communication apparatus receives a third BGP message sent by a third communication apparatus. The third BGP message is used for advertising a fourth EVPN MAC route. The fourth EVPN MAC route includes a third MAC address and third indication information. The third indication information indicates a priority of the fourth EVPN MAC route. Both the first communication apparatus and the third communication apparatus are gateways. In addition, the first communication apparatus stores the fourth EVPN MAC route. A next hop of the fourth EVPN MAC route points to the third communication apparatus. It should be noted that the third indication information is similar to the foregoing first indication information, and details are not described herein again.

Then, the first communication apparatus learns the third MAC address from a local interface, and the first communication apparatus stores a second local MAC entry that reaches the third MAC address and whose next hop points to the local interface. A priority of the second local MAC entry is higher than the priority of the fourth EVPN MAC route. It should be noted that details are similar to those described in FIG. 3, and are not described herein again.

Details are similar to the foregoing descriptions in which Sleaf1 receives the third BGP message sent by Sleaf2, and details are not described herein again.

It may be understood that, in this implementation of this application, the first communication apparatus may be Sleafl in FIG. 3, and the third communication apparatus may be Sleaf2 or another Sleaf. Alternatively, the first communication apparatus may be Sleaf2 in FIG. 3, and the third communication apparatus may be Sleafl or another Sleaf. This is not specifically limited herein.

In this implementation of this application, the first communication apparatus generates the first BGP message used for advertising the first EVPN MAC route. The first BGP message includes the first MAC address and the first indication information. The first indication information indicates the priority of the first EVPN MAC route. In addition, the first communication apparatus sends the first BGP message to the second communication apparatus. In this implementation of this application, it may be determined, based on the first indication information, that the first MAC address is the MAC address of the access-side apparatus of the gateway, or the first indication information carries the identifier of the priority, so that when the second communication apparatus learns the first MAC address locally, the second communication apparatus does not locally generate the first local MAC entry corresponding to the first MAC address. In this way, it can be ensured that when the first communication apparatus and the second communication apparatus form a loop, or a communication apparatus on a non-gateway side is attacked by using a spoofed first MAC address, a MAC route of the first MAC address learned locally is not generated, to ensure that the first MAC address is not migrated from the gateway side, namely, an aggregation layer gateway device, to the non-gateway side, namely, an access-side device, and ensure that traffic of the access-side device reaches the aggregation layer gateway device, so that a possibility that the access-side device is successfully attacked is reduced, thereby improving reliability of network security.

In addition, the following describes another communication method provided in FIG. 8. The communication method is performed by a second communication apparatus. FIG. 8 is another schematic flowchart of a communication method according to an embodiment of this application. The method specifically includes the following steps.

801: The second communication apparatus receives a BGP message sent by a first communication apparatus.

Specifically, the second communication apparatus receives the BGP message sent by the first communication apparatus. The BGP message is used for advertising a first EVPN MAC route. The BGP message includes a first MAC address and indication information. The indication information indicates a priority of the first EVPN MAC route. The indication information is similar to the first indication information in FIG. 3 and FIG. 6. Details are not described herein again.

For example, in a possible implementation, the second communication apparatus may be an access-side device, namely, Aleaf shown in FIG. 3, and the first communication apparatus is an aggregation layer gateway, namely, Sleaf. For example, when the second communication apparatus is Aleaf1 in FIG. 3, the first communication apparatus is Sleaf1 in FIG. 3, and Aleaf1 receives the first EVPN MAC route advertised by Sleaf1 via Spine1. Details are shown in step S3 and step S4 in FIG. 3, and are not described herein again.

Alternatively, the second communication apparatus may be an access-side device, namely, Aleaf shown in FIG. 3, and the first communication apparatus is an intermediate forwarding node or an RR. For example, when the second communication apparatus is Aleafl in FIG. 3, the first communication apparatus is Spine1 in FIG. 3, and Aleafl receives the BGP message that is sent by Spine1 and that is used for advertising the first EVPN MAC route. Details are shown in step S4 in FIG. 3, and are not described herein again.

In a possible implementation, the second communication apparatus may be an aggregation layer gateway device, namely, the gateway shown in FIG. 3, and the first communication apparatus is a gateway. For example, when the second communication apparatus is Sleaf2 in FIG. 3, the first communication apparatus is Sleaf1 in FIG. 3, and Sleaf2 receives the BGP message that is sent by Sleafl and that is used for advertising the first EVPN MAC route. Details are shown in step S7 in FIG. 3, and are not described herein again.

802: The second communication apparatus stores the first EVPN MAC route.

After the second communication apparatus stores the first EVPN MAC route advertised by the first communication apparatus, for example, the second communication apparatus may store the first EVPN MAC route in a MAC entry of the second communication apparatus.

In a possible implementation, an extended communities attribute of the BGP message includes the indication information.

In a possible implementation, the extended communities attribute is an extended communities attribute for MAC migration or an extended communities attribute of a default gateway.

In a possible implementation, a communities attribute of the BGP message includes the indication information.

In a possible implementation, the first communication apparatus is a gateway, and the second communication apparatus is a non-gateway.

In a possible implementation, a role of the first communication apparatus is Sleaf, and a role of the second communication apparatus is Aleaf.

In a possible implementation, after the second communication apparatus stores the first EVPN MAC route, when learning the first MAC address from a local interface, the second communication apparatus skips generating a first local MAC entry that reaches the first MAC address and whose next hop points to the local interface.

In a possible implementation, when learning the first MAC, the second communication apparatus generates an alarm. The alarm indicates that the second communication apparatus learns the first MAC address from the local interface.

Details are similar to those described in step S6 in FIG. 3, and are not described herein again.

In a possible implementation, the second communication apparatus advertises a second EVPN MAC route to the first communication apparatus. The second EVPN MAC route is a UMR with an all-zero MAC address.

In a possible implementation, both the first communication apparatus and the second communication apparatus are gateways. The second communication apparatus learns the first MAC address from the local interface, and generates a second local MAC entry that reaches the first MAC address and whose next hop points to the local interface. A priority of the second local MAC entry is higher than the priority of the first EVPN MAC route. Details are similar to those described in step S8 and step S9 in FIG. 3, and are not described herein again.

In a possible implementation, the indication information indicates that the first MAC address is a MAC address of an access-side apparatus of the gateway. Specifically, the priority of the first EVPN MAC route is implicitly indicated by using the indication information to indicate that the first MAC address is the MAC address of the access-side apparatus of the gateway. Alternatively, the indication information carries an identifier of the priority. Specifically, the priority of the first EVPN MAC route is displayed by using the identifier of the priority.

It should be noted that specific implementations of the communication method and the possible implementations of the communication method in FIG. 8 are similar to those described in the examples in FIG. 3 and FIG. 6. Details are not described herein again.

In this implementation of this application, the second communication apparatus receives the BGP message used for advertising the first EVPN MAC route and stores the first EVPN MAC route. When the second communication apparatus is a non-gateway, it can be ensured, based on the indication information, that when the first communication apparatus and the second communication apparatus form a loop, or a communication apparatus on a non-gateway side is attacked by using a spoofed first MAC address, a MAC route of the first MAC address learned locally is not generated, to ensure that the first MAC address is not migrated from a gateway side, namely, the aggregation layer gateway device, to the non-gateway side, namely, the access-side device, and ensure that traffic of the access-side device reaches the aggregation layer gateway device, so that a possibility that the access-side device is successfully attacked is reduced, thereby improving reliability of network security. When both the first communication apparatus and the second communication apparatus are gateways, the first MAC address may be migrated to different gateways based on the indication information, to ensure that network access can still be normally supported when the first communication apparatus is faulty, and ensure that traffic transmission is normal.

The foregoing describes the communication methods provided in embodiments of this application in detail. Specific examples are used in this specification to describe principles and implementations of this application. Descriptions of the foregoing embodiments are merely used to help understand the method and core ideas of this application. In addition, a person of ordinary skill in the conventional technology may make modifications in terms of the specific implementations and application scopes based on the ideas of this application. In conclusion, the content of this specification shall not be construed as a limitation on this application.

It should be noted that, in addition to the resource pool, the foregoing destination device, that is, the access-side device on the gateway side, may be an authentication server, a cloud server, a big data center, a cluster server, a controller, or another network device or computer device that supports access by a gateway device. This is not specifically limited herein.

In addition, it should be noted that the foregoing non-gateway device, that is, an access-side device on a user-side, an RR, or an aggregation layer gateway device, may be a gateway device such as a router, a switch, or a hub. This is not specifically limited herein.

To implement functions in the foregoing method provided in embodiments of this application, the first communication apparatus, the second communication apparatus, or the third communication apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 9, an embodiment of this application further provides a communication apparatus. The communication apparatus is used in an internet industry. Specifically, FIG. 9 is a diagram of a structure of a communication apparatus according to an embodiment of this application. In a possible implementation, the communication apparatus may include modules or units that perform and that is in one-to-one correspondence with the method/operations/steps/actions in FIG. 7 in the foregoing method embodiment. The units may be hardware circuits, software, or may be implemented by a hardware circuit in combination with software. In a possible implementation, the communication apparatus 900 may include a processing unit 902 and a sending unit 903. The processing unit 902 may be configured to perform the step of generating a first BGP message used for advertising a first EVPN MAC route in the foregoing method embodiment, and the sending unit 903 may be configured to perform the step of sending the first BGP message to a second communication apparatus in the foregoing method embodiment.

In another possible design, the communication apparatus 900 further includes a receiving unit 901, configured to perform the step of receiving a second EVPN MAC route sent by the second communication apparatus in the method embodiment.

In this embodiment of this application, the processing unit 902 generates the first BGP message, and the sending unit 903 sends, to the second communication apparatus, the first BGP message advertising the first EVPN MAC route. The first BGP message includes a first MAC address and first indication information, and the first indication information of the first BGP message indicates a priority of the first EVPN MAC route. Therefore, the second communication apparatus can ensure, based on the first indication information, that when the communication apparatus 900 and the second communication apparatus form a loop, or a communication apparatus on a non-gateway side is attacked by using a spoofed first MAC address, a MAC route of the first MAC address learned locally is not generated, and it is ensured that the first MAC address is not migrated from a gateway side, namely, an aggregation layer gateway device, to the non-gateway side, namely, an access-side device, to ensure that traffic of the access-side device reaches the aggregation layer gateway device, so that a possibility that the access-side device is successfully attacked is reduced, thereby improving reliability of network security.

In other possible designs, the receiving unit 901, the processing unit 902, and the sending unit 903 may perform and be in one-to-one correspondence with the method/operations/steps/actions in the possible implementations of an energy storage device in the foregoing method embodiments.

In a possible design, the communication apparatus 900 is a gateway.

In a possible design, a role of the communication apparatus 900 is Sleaf, and a role of the second communication apparatus is Aleaf.

In a possible design, an extended communities attribute of the first BGP message includes the first indication information.

In a possible design, the extended communities attribute is an extended communities attribute for MAC migration or an extended communities attribute of a default gateway.

In a possible design, a communities attribute of the first BGP message includes the first indication information.

In a possible design, the first indication information indicates that the first MAC address is a MAC address of an access-side apparatus of a gateway. Specifically, the priority of the first EVPN MAC route is implicitly indicated by using the first indication information to indicate that the first MAC address is the MAC address of the access-side apparatus of the gateway.

Alternatively, the first indication information carries an identifier of the priority. The priority of the first EVPN MAC route is displayed by using the identifier of the priority.

In a possible design, the receiving unit 901 is further configured to receive a second BGP message from the second communication apparatus. The second BGP message is used for advertising a third EVPN MAC route. The second BGP message includes a second MAC address and second indication information. The second indication information indicates a priority of the third EVPN MAC route. A role of the communication apparatus 900 is a non-gateway. A role of the second communication apparatus is a gateway.

The processing unit 902 is further configured to: when learning the second MAC address from a local interface, skip generating a first local MAC entry that reaches the second MAC address and whose next hop points to the local interface.

In a possible design, the receiving unit 901 is further configured to receive a third BGP message that is sent by a third communication apparatus and that is used for advertising a fourth EVPN MAC route. The third BGP message includes a third MAC address and third indication information. The third indication information indicates a priority of the fourth EVPN MAC route. Both the communication apparatus 900 and the third communication apparatus are gateways.

The processing unit 902 is further configured to store the fourth EVPN MAC route. A next hop of the fourth EVPN MAC route points to the third communication apparatus.

The processing unit 902 is further configured to learn the second MAC address from a local interface.

The processing unit 902 is further configured to store a second local MAC entry that reaches the third MAC address and whose next hop points to the local interface.

For beneficial effects of the communication apparatus in the foregoing designs in this application, refer to beneficial effects of the implementations in the method embodiments in one-to-one correspondence in FIG. 3, FIG. 6, and FIG. 7. Details are not described herein again.

It should be noted that content such as information exchange and an execution process between the modules/units in the communication apparatus in this embodiment corresponding to FIG. 9 is based on a same concept as the method embodiment corresponding to FIG. 7 in this application. For specific content, refer to the descriptions in the method embodiment in this application. Details are not described herein again.

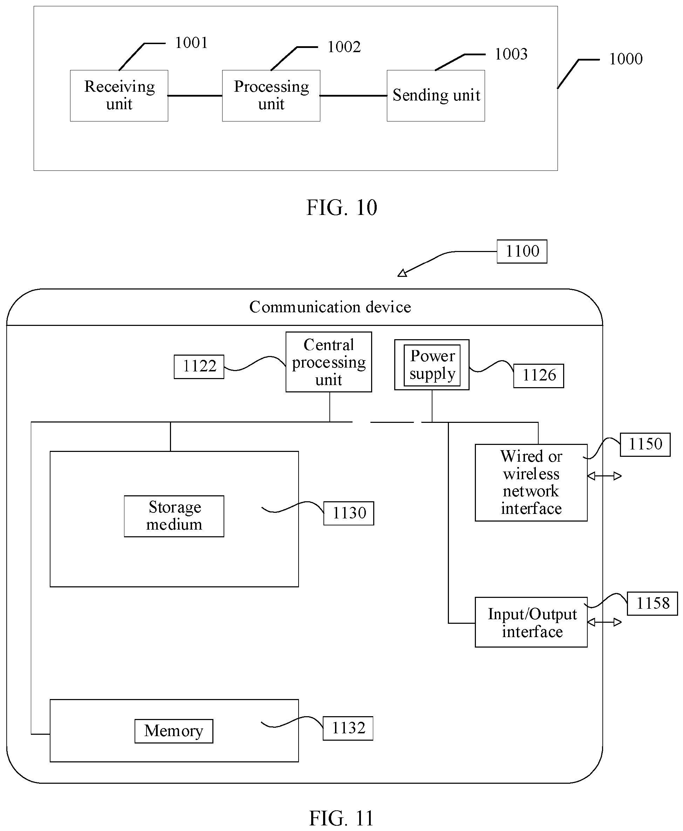

In addition, as shown in FIG. 10, an embodiment of this application further provides another communication apparatus. The communication apparatus is used in an internet industry. Specifically, FIG. 10 is another diagram of a structure of a communication apparatus according to an embodiment of this application. In a possible implementation, the communication apparatus may include modules or units that perform and that is in one-to-one correspondence with the method/operations/steps/actions in FIG. 8 in the foregoing method embodiment. The units may be hardware circuits, software, or may be implemented by a hardware circuit in combination with software. In a possible implementation, the communication apparatus 1000 may include a receiving unit 1001 and a processing unit 1002. The receiving unit 1001 may be configured to perform the step of receiving a BGP message in the foregoing method embodiment, and the processing unit 1002 may be configured to perform the step of storing a first EVPN MAC route in the foregoing method embodiment.

In another possible design, the communication apparatus 1000 further includes a sending unit 1001, configured to perform the step of sending a second EVPN MAC route to a first communication apparatus in the method embodiment. The second EVPN MAC route is a UMR with an all-zero MAC address.

In this embodiment of this application, the receiving unit receives a first BGP message used for advertising the first EVPN MAC route, and the processing unit 902 stores the first EVPN MAC route. The first EVPN MAC route includes a first MAC address and indication information. The indication information indicates a priority of the first EVPN MAC route. Therefore, the communication apparatus 1000 can ensure, based on the indication information, that when the first communication apparatus and the communication apparatus 1000 form a loop, or a communication apparatus on a non-gateway side is attacked by using a spoofed first MAC address, a MAC route of the first MAC address learned locally is not generated, and it is ensured that the first MAC address is not migrated from a gateway side, namely, an aggregation layer gateway device, to the non-gateway side, namely, an access-side device, to ensure that traffic of the access-side device reaches the aggregation layer gateway device, so that a possibility that the access-side device is successfully attacked, thereby improving reliability of network security.

In other possible designs, the receiving unit 1001, the processing unit 1002, and the sending unit 1003 may perform and be in one-to-one correspondence with the method/operations/steps/actions in the possible implementations of an energy storage device in the foregoing method embodiments.

In a possible design, an extended communities attribute of the BGP message includes the indication information.

In a possible design, the extended communities attribute is an extended communities attribute for MAC migration or an extended communities attribute of a default gateway.

In a possible design, a communities attribute of the BGP message includes the indication information.

In a possible design, the first communication apparatus is a gateway, and the communication apparatus 1000 is a non-gateway.

In a possible design, a role of the first communication apparatus is Sleaf, and a role of the communication apparatus 1000 is Aleaf.

In a possible design, the processing unit 1002 is further configured to: when learning the first MAC address from a local interface, skip generating a first local MAC entry that reaches the first MAC address and whose next hop points to the local interface.

In a possible design, the processing unit 1002 is further configured to generate an alarm. The alarm indicates that the communication apparatus 1000 learns the first MAC address from the local interface.

In a possible design, both the first communication apparatus and the communication apparatus 1000 are gateways. The processing unit 1002 is further configured to learn the first MAC address from a local interface.

The processing unit 1002 is further configured to generate a second local MAC entry that reaches the first MAC address and whose next hop is the local interface. A priority of the second local MAC entry is higher than the priority of the first EVPN MAC route.

In a possible design, the indication information indicates that the first MAC address is a MAC address of an access-side apparatus of a gateway. Specifically, the priority of the first EVPN MAC route is implicitly indicated by using the first indication information to indicate that the first MAC address is the MAC address of the access-side apparatus of the gateway.

Alternatively, the indication information carries an identifier of the priority. The priority of the first EVPN MAC route is displayed by using the identifier of the priority.

For beneficial effects of the communication apparatus in the foregoing designs in this application, refer to beneficial effects of the implementations in the method embodiments in one-to-one correspondence in FIG. 3, FIG. 6, and FIG. 8. Details are not described herein again.

It should be noted that content such as information exchange and an execution process between the modules/units in the communication apparatus in this embodiment corresponding to FIG. 10 is based on a same concept as the method embodiment corresponding to FIG. 8 in this application. For specific content, refer to the descriptions in the method embodiment in this application. Details are not described herein again.

In addition, functional modules or units in embodiments of this application may be integrated into one processor, each of the modules or units may exist alone physically, or at least two modules or units may be integrated into one module or unit. The integrated module or unit may be implemented in the form of hardware, or may be implemented in a form of a software functional module.

The following describes another communication apparatus according to an embodiment of this application. FIG. 11 is a diagram of another structure of a communication apparatus according to an embodiment of this application. The communication apparatus 1100 may be the first communication apparatus or the second communication apparatus in the embodiment corresponding to FIG. 7 or FIG. 8, and is configured to implement functions of the first communication apparatus or the second communication apparatus in FIG. 9 or FIG. 10. Specifically, the communication apparatus 1100 is implemented by one or more servers. The communication apparatus 1100 may have a large difference due to different configurations or performance, and may include one or more central processing units (central processing units, CPUs) 1122 (for example, one or more central processing units) and a memory 1132, and one or more storage media 1130 (for example, one or more storage devices). The memory 1132 and the storage medium 1130 may be used for temporary storage or persistent storage. A program stored in the storage medium 1130 may include one or more modules (not shown), and each module may include a series of instruction operations on the communication apparatus 1100. Further, the central processing unit 1122 may be configured to communicate with the storage medium 1130 and perform on the communication apparatus 1100 the series of instruction operations in the storage medium 1130.

The communication apparatus 1100 may further include one or more power supplies 1126, one or more wired or wireless network interfaces 1150, and/or one or more input/output interfaces 1158.

In this embodiment of this application, the central processing unit 1122 is configured to perform the method in the embodiment corresponding to FIG. 7. For example, the central processing unit 1122 may be configured to: generate a first BGP message used for advertising a first EVPN MAC route, and send the first BGP message to the second communication apparatus. The first BGP message includes a first MAC address and first indication information. The first indication information indicates a priority of the first EVPN MAC route. In this way, a non-gateway does not generate, based on the first indication information, a corresponding local MAC entry based on the first MAC address learned locally. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

Alternatively, in this embodiment of this application, the central processing unit 1122 is configured to perform the method in the embodiment corresponding to FIG. 8. For example, the central processing unit 1122 may be configured to receive a BGP message that is sent by the first communication apparatus and that is used for advertising a first EVPN MAC route. The BGP message includes a first MAC address and indication information. The indication information of the BGP message indicates a priority of the first EVPN MAC route. A non-gateway does not generate, based on the first indication information, a corresponding local MAC entry based on the first MAC address learned locally. This resolves a problem that when an access-side device and an aggregation layer gateway device form a loop, or the access-side device is attacked by using a spoofed MAC address, traffic of the access-side device cannot reach the aggregation layer gateway device. In addition, an attack on the access-side device is avoided, thereby improving reliability of network security.

An embodiment of this application further provides another communication apparatus, including a processor. The processor is coupled to a memory. The memory stores instructions. The processor is configured to execute the instructions, so that a communication device performs any one of the implementations described in the foregoing method embodiments.

An embodiment of this application further provides a computer-readable storage medium, including computer-readable instructions. When the computer-readable instructions are run on a computer, the computer is enabled to perform any one of the implementations described in the foregoing method embodiments.

An embodiment of this application further provides a computer program product. The computer program product includes a computer program or instructions. When the computer program or instructions are run on a computer, the computer is enabled to perform any one of the implementations described in the foregoing method embodiments.

This application further provides a chip or a chip system. The chip may include a processor. The chip may further include a memory (or a storage module) and/or a transceiver (or a communication module). Alternatively, the chip is coupled to a memory (or a storage module) and/or a transceiver (or a communication module). The transceiver (or the communication module) may be configured to support the chip in performing wired and/or wireless communication. The memory (or the storage module) may be configured to store a program or a set of instructions. The processor invokes the program or the set of instructions to implement operations performed by the terminal or the communication apparatus in any one of the foregoing method embodiments or the possible implementations of the method embodiments. The chip system may include the chip, or may include the chip and other discrete devices, such as a memory (or a storage module) and/or a transceiver (or a communication module).

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the conventional technology may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to the conventional technology may be implemented in a form of a software product. The computer software product is stored in a readable storage medium, for example, a floppy disk, a USB flash drive, a removable hard disk, a read only memory (read only memory, ROM), a random access memory (random access memory, RAM), a magnetic disk, or an optical disc in a computer, and includes several instructions for instructing a computer device (which may be a personal computer, a training device, a communication apparatus, or the like) to perform the method in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When computer program instructions are loaded and executed on a computer, all or some of procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

## Claims

1. A communication method, comprising:
generating, by a first communication apparatus, a first border gateway protocol BGP message used for advertising a first Ethernet virtual private network media access control EVPN MAC route, wherein the first BGP message comprises a first MAC address and first indication information, and the first indication information indicates a priority of the first EVPN MAC route; and
sending, by the first communication apparatus, the first BGP message to a second communication apparatus.

2. The method according to claim 1, wherein the first communication apparatus is a gateway.

3. The method according to claim 1 or 2, wherein a role of the first communication apparatus is Sleaf, and a role of the second communication apparatus is Aleaf.

4. The method according to any one of claims 1 to 3, wherein an extended communities attribute of the first BGP message comprises the first indication information.

5. The method according to claim 4, wherein the extended communities attribute is an extended communities attribute for MAC migration or an extended communities attribute of a default gateway.

6. The method according to any one of claims 1 to 3, wherein a communities attribute of the first BGP message comprises the first indication information.

7. The method according to any one of claims 1 to 6, wherein the first indication information indicates that the first MAC address is a MAC address of an access-side apparatus of the gateway, and that the first indication information indicates a priority of the first EVPN MAC route comprises:
implicitly indicating the priority of the first EVPN MAC route by using the first indication information to indicate that the first MAC address is the MAC address of the access-side apparatus of the gateway; or
the first indication information comprises an identifier of the priority, and that the first indication information indicates a priority of the first EVPN MAC route comprises:
displaying the priority of the first EVPN MAC route by using the identifier of the priority.

8. The method according to any one of claims 1 to 7, wherein the method further comprises:
receiving, by the first communication apparatus, a second EVPN MAC route advertised by the second communication apparatus, wherein the second EVPN MAC route is an unknown media access control route UMR with an all-zero MAC address.

9. The method according to any one of claims 1 and 4 to 7, wherein the method further comprises:
receiving, by the first communication apparatus, a second BGP message sent by a gateway, wherein the second BGP message is used for advertising a third EVPN MAC route, the second BGP message comprises a second MAC address and second indication information, the second indication information indicates a priority of the third EVPN MAC route, a role of the first communication apparatus is a non-gateway, and a role of the second communication apparatus is a gateway; and
when learning the second MAC address from a local interface, skipping, by the first communication apparatus, generating a first local MAC entry that reaches the second MAC address and whose next hop points to the local interface.

10. The method according to any one of claims 1 to 8, wherein the method further comprises:
receiving, by the first communication apparatus, a third BGP message sent by a third communication apparatus, wherein the third BGP message is used for advertising a fourth EVPN MAC route, the third BGP message comprises a third MAC address and third indication information, the third indication information indicates a priority of the fourth EVPN MAC route, and both the first communication apparatus and the third communication apparatus are gateways;
storing, by the first communication apparatus, the fourth EVPN MAC route, wherein a next hop of the fourth EVPN MAC route points to the third communication apparatus;
learning, by the first communication apparatus, the third MAC address from a local interface; and
storing, by the first communication apparatus, a second local MAC entry that reaches the third MAC address and whose next hop points to the local interface.

11. A communication method, performed by a second communication apparatus, wherein the method comprises:
receiving a first BGP message sent by a first communication apparatus, wherein the first BGP message is used for advertising a first EVPN MAC route, the first BGP message comprises a first MAC address and indication information, and the indication information indicates a priority of the first EVPN MAC route; and
storing the first EVPN MAC route.

12. The method according to claim 11, wherein an extended communities attribute of the first BGP message comprises the indication information.

13. The method according to claim 12, wherein the extended communities attribute is an extended communities attribute for MAC migration or an extended communities attribute of a default gateway.

14. The method according to claim 11, wherein a communities attribute of the first BGP message comprises the indication information.

15. The method according to any one of claims 11 to 14, wherein the first communication apparatus is a gateway, and the second communication apparatus is a non-gateway.

16. The method according to any one of claims 11 to 15, wherein a role of the first communication apparatus is Sleaf, and a role of the second communication apparatus is Aleaf.

17. The method according to claim 15 or 16, wherein the method further comprises:
when learning the first MAC address from a local interface, skipping generating a first local MAC entry that reaches the first MAC address and whose next hop points to the local interface.

18. The method according to claim 17, wherein the method further comprises:
generating an alarm, wherein the alarm indicates that the second communication apparatus learns the first MAC address from the local interface.

19. The method according to any one of claims 11 to 18, wherein the method further comprises:
advertising a second EVPN MAC route to the first communication apparatus, wherein the second EVPN MAC route is an unknown media access control route UMR with an all-zero MAC address.

20. The method according to any one of claims 11 to 14, wherein both the first communication apparatus and the second communication apparatus are gateways, and the method further comprises:
learning the first MAC address from a local interface; and
generating a second local MAC entry that reaches the first MAC address and whose next hop points to the local interface, wherein a priority of the second local MAC entry is higher than the priority of the first EVPN MAC route.

21. The method according to any one of claims 11 to 20, wherein the indication information indicates that the first MAC address is a MAC address of an access-side apparatus of the gateway, and that the indication information indicates a priority of the first EVPN MAC route comprises:
implicitly indicating the priority of the first EVPN MAC route by using the indication information to indicate that the first MAC address is the MAC address of the access-side apparatus of the gateway; or
the indication information comprises an identifier of the priority, and that the indication information indicates a priority of the first EVPN MAC route comprises:
displaying the priority of the first EVPN MAC route by using the identifier of the priority.

22. A communication apparatus, wherein the communication apparatus comprises:
a processing unit, configured to generate a first BGP message used for advertising a first EVPN MAC route, wherein the first BGP message comprises a first MAC address and first indication information, and the first indication information indicates a priority of the first EVPN MAC route; and
a sending unit, configured to send the first BGP message to a second communication apparatus.

23. The apparatus of claim 22, wherein the communication apparatus is a gateway.

24. The apparatus according to claim 22 or 23, wherein a role of the communication apparatus is Sleaf, and a role of the second communication apparatus is Aleaf.

25. The apparatus according to any one of claims 22 to 24, wherein an extended communities attribute of the first BGP message comprises the first indication information.

26. The apparatus according to claim 25, wherein the extended communities attribute is an extended communities attribute for MAC migration or an extended communities attribute of a default gateway.

27. The apparatus according to any one of claims 22 to 24, wherein a communities attribute of the first BGP message comprises the first indication information.

28. The apparatus according to any one of claims 22 to 27, wherein the first indication information indicates that the first MAC address is a MAC address of an access-side apparatus of the gateway, and that the first indication information indicates a priority of the first EVPN MAC route comprises:
implicitly indicating the priority of the first EVPN MAC route by using the first indication information to indicate that the first MAC address is the MAC address of the access-side apparatus of the gateway; or
the first indication information comprises an identifier of the priority, and that the first indication information indicates a priority of the first EVPN MAC route comprises:
displaying the priority of the first EVPN MAC route by using the identifier of the priority.

29. The apparatus according to any one of claims 22 to 28, wherein the communication apparatus further comprises:
a receiving unit, configured to receive a second EVPN MAC route advertised by the second communication apparatus, wherein the second EVPN MAC route is a UMR with an all-zero MAC address.

30. The apparatus according to any one of claims 22 and 25 to 28, wherein the receiving unit is further configured to receive a second BGP message sent by a gateway, wherein the second BGP message is used for advertising a third EVPN MAC route, the second BGP message comprises a second MAC address and second indication information, the second indication information indicates a priority of the third EVPN MAC route, a role of the communication apparatus is a non-gateway, and a role of the second communication apparatus is a gateway; and
the processing unit is further configured to: when learning the second MAC address from a local interface, skip generating a first local MAC entry that reaches the second MAC address and whose next hop points to the local interface.

31. The apparatus according to any one of claims 22 to 29, wherein the receiving unit is further configured to receive a third BGP message sent by a third communication apparatus, wherein the third BGP message is used for advertising a fourth EVPN MAC route, the third BGP message comprises a third MAC address and third indication information, the third indication information indicates a priority of the fourth EVPN MAC route, and both the communication apparatus and the third communication apparatus are gateways;
the processing unit is further configured to store the fourth EVPN MAC route, wherein a next hop of the fourth EVPN MAC route points to the third communication apparatus;
the processing unit is further configured to learn the third MAC address from a local interface; and
the processing unit is further configured to store a second local MAC entry that reaches the third MAC address and whose next hop points to the local interface.

32. A communication apparatus, wherein the communication apparatus comprises:
a receiving unit, configured to receive a first BGP message sent by a first communication apparatus, wherein the first BGP message is used for advertising a first EVPN MAC route, the first BGP message comprises a first MAC address and indication information, and the indication information indicates a priority of the first EVPN MAC route; and
a processing unit, configured to store the first EVPN MAC route.

33. The apparatus according to claim 32, wherein an extended communities attribute of the first BGP message comprises the indication information.

34. The apparatus according to claim 33, wherein the extended communities attribute is an extended communities attribute for MAC migration or an extended communities attribute of a default gateway.

35. The apparatus according to claim 32, wherein a communities attribute of the first BGP message comprises the indication information.

36. The apparatus according to any one of claims 32 to 35, wherein the first communication apparatus is a gateway, and the communication apparatus is a non-gateway.

37. The apparatus according to any one of claims 32 to 36, wherein a role of the first communication apparatus is Sleaf, and a role of the communication apparatus is Aleaf.

38. The apparatus according to claim 36 or 37, wherein the processing unit is further configured to: when learning the first MAC address from a local interface, skip generating a first local MAC entry that reaches the first MAC address and whose next hop points to the local interface.

39. The apparatus according to claim 38, wherein the processing unit is further configured to generate an alarm, wherein the alarm indicates that the second communication apparatus learns the first MAC address from the local interface.

40. The apparatus according to any one of claims 32 to 39, wherein the communication apparatus further comprises:
a sending unit, configured to advertise a second EVPN MAC route to the first communication apparatus, wherein the second EVPN MAC route is a UMR with an all-zero MAC address.

41. The apparatus according to any one of claims 32 to 35, wherein both the first communication apparatus and the communication apparatus are gateways, and the processing unit is further configured to learn the first MAC address from a local interface; and
the processing unit is further configured to generate a second local MAC entry that reaches the first MAC address and whose next hop points to the local interface.

42. The apparatus according to any one of claims 32 to 35, wherein the indication information indicates that the first MAC address is a MAC address of an access-side apparatus of a gateway, and that the indication information indicates a priority of the first EVPN MAC route comprises:
implicitly indicating the priority of the first EVPN MAC route by using the indication information to indicate that the first MAC address is the MAC address of the access-side apparatus of the gateway; or
the indication information comprises an identifier of the priority, and that the indication information indicates a priority of the first EVPN MAC route comprises:
displaying the priority of the first EVPN MAC route by using the identifier of the priority.

43. A communication apparatus, comprising a processor, wherein the processor is coupled to a memory, the memory stores instructions, and the processor is configured to execute the instructions, to enable the communication apparatus to perform the method according to any one of claims 1 to 21.

44. A computer-readable storage medium, comprising computer-readable instructions, wherein when the computer-readable instructions are run on a computer, the method according to any one of claims 1 to 21 is performed.

45. A computer program product, comprising computer-readable instructions, wherein when the computer-readable instructions are run on a computer, the method according to any one of claims 1 to 21 is performed.
